# EUROPEAN PATENT APPLICATION

(11) **EP 3 324 416 A1**
(43) Date of publication of application: **23.05.2018**
(21) Application number: 16824196.6
(22) Date of filing: 15.06.2016
(51) Int. Cl.: H01C 7/04, H01C 1/01, H01C 1/028

(54) **ELECTRONIC COMPONENT**

(30) Priority: 15.07.2015 JP 2015141033
(71) Applicant: Murata Manufacturing Co., Ltd., Nagaokakyo-shi, Kyoto 617-8555 (JP)
(72) Inventor: SENTOKU, Satoru, Nagaokakyo-shi, Kyoto 617-8555 (JP); MIURA, Tadamasa, Nagaokakyo-shi, Kyoto 617-8555 (JP)
(74) Representative: Zimmermann, Tankred Klaus
(86) International application number: PCT/JP2016/067840
(87) International publication number: WO 2017/010216

(57) **Abstract**

An electronic component includes: a temperature sensor having a pair of electrodes; at least one metal block electrically connected to an electrode of the temperature sensor; an insulation part in which the temperature sensor and the at least one metal block are embedded; and an external terminal part electrically connected to the electrode of the temperature sensor. The at least one metal block has a flat surface exposed from the insulation part. The flat surface constitutes the external terminal part.

## Description

### Technical Field

The present invention relates to an electronic component provided with a temperature sensor.

### Background Art

An electronic component provided with a temperature sensor is used in a wide variety of applications such as temperature detection application and temperature compensation application. In recent years, temperature sensors having smaller and thinner size have been required in association with miniaturization and thinning of electronic devices. The temperature sensors having various configurations have been developed to achieve miniaturization and thinning of the temperature sensors.

Patent Literature 1 discloses a thin film thermistor having a resistance value which is decreased as temperature is increased. The thin film thermistor described in Patent Literature 1 comprises a substrate, a first insulating film 3 (a functional film) provided on the substrate, a pair of electrode films 41, 42 (both functional films) disposed on the first insulating film 3, a thermistor film 5 (a functional film) provided on the electrodes 41 and 42, a pair of pad electrodes 71, 72 drawn from the pair of electrodes 41 and 42, respectively and a protective film 6 (a functional film) formed to cover the thermistor film 5.

### Prior Art Literature

### Patent Literature

Patent Literature 1: JP 2012-119389 A

### Summary of Invention

### Technical Problem

Such an electronic component is attached to an electronic device by laser welding (bonding) or the like at the pad electrode portions. However, a heat generated during the laser welding may be transferred to a temperature sensor inside the electronic component to deteriorate a property of the temperature sensor. The deterioration of the temperature sensor caused by the heat may be especially remarkable when the temperature sensor having high sensitivity is used. On the other hand, a temperature sensor having smaller size and higher sensitivity has been required in association with miniaturization and enhanced performance of electronic devices.

An object of the present invention is to provide an electronic component capable of being miniaturized, having highly sensitive temperature detection function and capable of suppressing the deterioration caused by the laser welding.

### Solution to Problem

The present inventors found that an electronic component provided with a temperature sensor can achieve both of miniaturization and highly sensitive temperature detection function of the electronic component and of suppressed deterioration due to laser welding by disposing a metal block having a large heat capacity inside the electronic component provided with the temperature sensor, and providing an external terminal part having direct or indirect contact with the metal block, and finally accomplished the present invention.

According to one aspect of the present invention, there is provided an electronic component comprising:
a temperature sensor comprising a pair of electrodes;
at least one metal block electrically connected to the electrode of the temperature sensor;
an insulation part embedding the temperature sensor and the at least one metal block therein; and
external terminal parts electrically connected to the electrodes of the temperature sensor,
wherein the at least one metal block has a flat surface exposed from the insulation part, the flat surface constituting the external terminal part.

### Advantageous Effects of Invention

The electronic component according to the present invention is provided with the metal block having a large heat capacity, and thus can suppress the deterioration of the temperature sensor caused by the heat generated during the laser welding even in a case where the electronic component is miniaturized and where the temperature sensor having high sensitivity is used. Therefore, the electronic component according to the present invention can be miniaturized, and has highly sensitive temperature detection function, and can suppress the deterioration caused by the laser welding.

### Brief Description of Drawings

Fig. 1A is a perspective view of an electronic component according to a first embodiment of the present invention.
Fig. 1B is a bottom view of the electronic component according to the first embodiment.
Fig. 1C is a perspective view of the electronic component according to the first embodiment abbreviating an insulation part.
Figs. 2A to 2C are schematic views showing a manufacturing process of the electronic component according to the first embodiment.
Fig. 3A is a perspective view of an electronic component according to a second embodiment of the present invention.
Fig. 3B is a bottom view of the electronic component according to the second embodiment.
Fig. 3C is a perspective view of the electronic component according to the second embodiment abbreviating an insulation part.
Figs. 4A to 4C are schematic views showing a manufacturing process of the electronic component according to the second embodiment.
Fig. 5 is a schematic view of a cross section of an electronic component according to a third embodiment of the present invention.
Fig. 6 is a schematic view of a cross section of an electronic component according to a fourth embodiment of the present invention.

### Description of Embodiments

Hereinafter, embodiments of the present invention will be described with reference to the drawings. The following embodiments are intended for the purpose of illustration, and the present invention is not limited to the following embodiments. Dimensions, materials, shapes, relative arrangements and the like of components described below are merely illustrative examples, and the scope of the present invention is not intended to be limited only to those unless specifically described. Sizes, shapes, positional relations and the like of components shown in the respective drawings may be exaggerated for clarifying explanations.

### [First Embodiment]

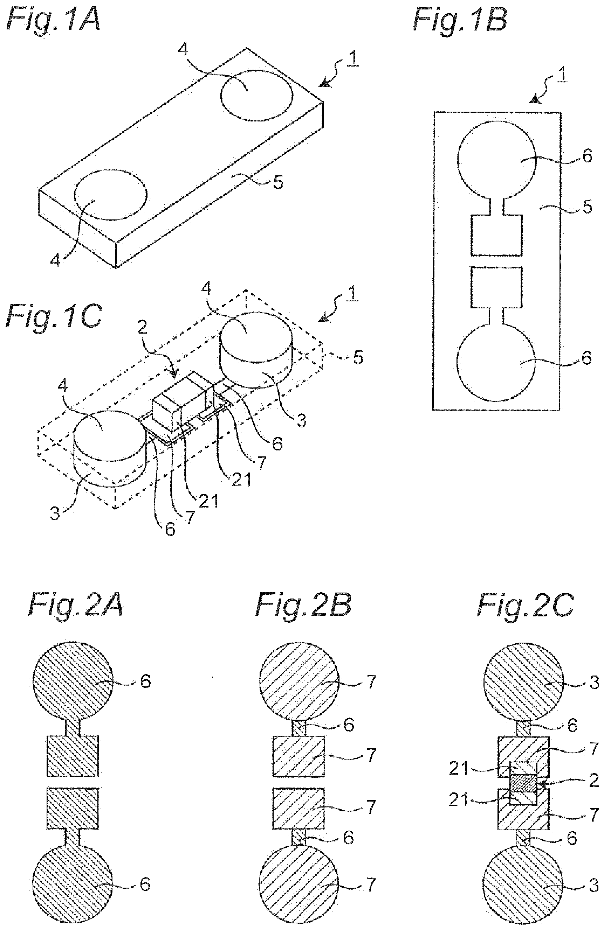

Fig. 1 shows an electronic component according to a first embodiment of the present invention. Fig. 1A is a perspective view of the electronic component according to this embodiment. Fig. 18 is a bottom view of the electronic component according to this embodiment. Fig. 1C is a perspective view of the electronic component according to this embodiment abbreviating an insulation part. The electronic component 1 shown in Fig. 1 comprises: a temperature sensor 2 comprising a pair of electrodes 21; at least one metal block 3 electrically connected to the temperature sensor 2; an insulation part 5 embedding the temperature sensor 2 and the at least one metal block 3 therein; and a pair of external terminal parts 4 electrically connected to the electrodes 21 of the temperature sensor 2.

The temperature sensor 2 is not particularly limited as long as it comprises a pair of electrodes 21, and the temperature sensor 2 can be appropriately selected according to targeted application. As the temperature sensor 2, for example, a metal temperature-measuring resistor such as a platinum thin-film temperature sensor and a thermistor may be used. The temperature sensor 2 is preferably a chip-type thermistor since it can provide an electronic component having highly sensitive temperature detection function at low cost. The chip-type thermistor may be any of a positive temperature coefficient thermistor (a PTC thermistor) and a negative temperature coefficient thermistor (a NTC thermistor).

The electronic component comprises at least one metal block. The electronic component 1 shown in Fig. 1 comprises two metal blocks 3. However, the electronic component according to the present invention is not limited to such a configuration, and the electronic component may comprise only one metal block, or may comprise three or more metal blocks. The metal block 3 is electrically connected to the electrode 21 of the temperature sensor 2. In the electronic component 1 shown in Fig. 1, the metal blocks 3 are electrically connected to the electrodes 21 of the temperature sensor 2 via conductor wirings 6. However, the present invention is not limited to such a configuration.

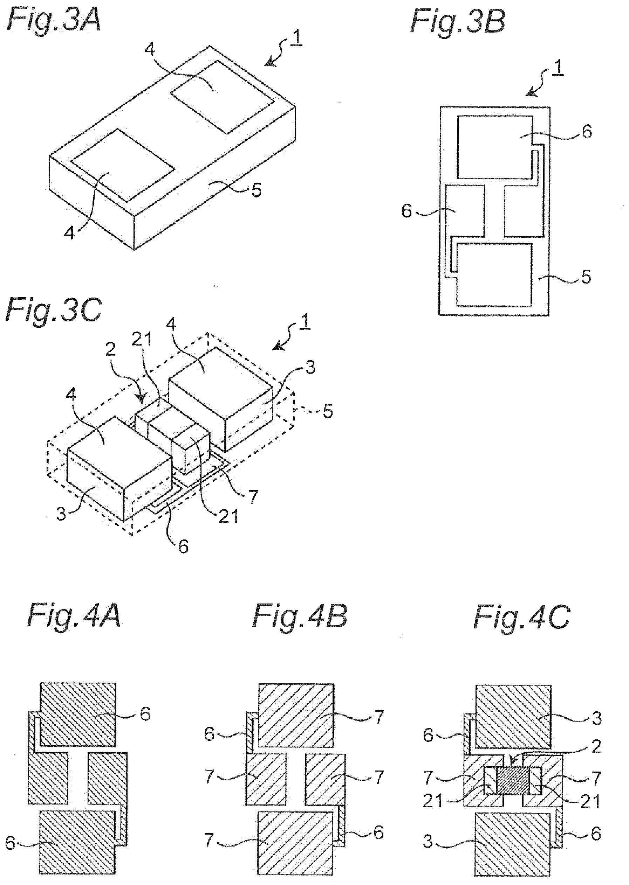

The metal block 3 has a flat surface exposed from an insulation part 5 described later, and the flat surface constitutes the external terminal part 4. The flat surface serves as a joint part during the laser welding described later, and thus the flat surface is desirably a uniform surface having high adhesion to a substance to be welded. However, the flat surface is not limited to such surface and may be curved surface and/or concave-convex surface, and the flat surface may also have a mark or the like provided thereon as a reference for alignment upon welding as long as it does not interfere with the laser welding. The shape of the metal block 3 is not particularly limited as long as the metal block 3 has the flat surface described above, and it may be a shape such as a columnar shape having a polygonal bottom surface such as a triangular prism and a quadrangular prism; a polygonal pyramid; a circular cone; and a bell shape, besides a cylindrical shape as shown in Fig. 1 and a rectangular parallelepiped as shown in Fig. 3. When the electronic component has two or more metal blocks, shapes and dimensions of the respective metal blocks may be the same or may be different from each other. In the electronic component 1 shown in Fig. 1, each of the metal blocks 3 has a flat surface (an upper surface) exposed from an upper surface of the insulation part 5, and the flat surface constitutes the external terminal part 4. In the electronic component 1 shown in Fig. 1, the upper surfaces of the metal blocks 3 also serve as the external terminal parts 4. However, the electronic component according to the present invention is not limited to such a configuration, and, for example, another metal block or the like to be the external terminal part can further be jointed to the upper surface of the metal block 3.

The electronic component 1 is attached to an electronic device or the like by, for example, laser welding with a ribbon strap made of an aluminum alloy or the like at the external terminal parts 4. The electronic component 1 according to this embodiment enables the laser welding to be conducted on a surface different from a surface where the temperature sensor 2 is mounted since the flat surface (upper surface) of the metal block 3 constitutes the external terminal part 4. In addition, the external terminal part 4 on which the laser welding is conducted is composed of the flat surface (upper surface) of the metal block having a large heat capacity, and thus, the heat generated during the laser welding can be prevented from being transferred to the temperature sensor 2. As a result, the deterioration of the temperature sensor 2 caused by the heat can be suppressed. This effect is particularly remarkable when the temperature sensor 2 has highly sensitive temperature detection function, and therefore when the temperature sensor 2 has relatively low heat resistance. Since the external terminal part 4 on which the laser welding is conducted is composed of the flat surface (upper surface) of the metal block 3 having a large heat capacity, the heat generated by the laser welding can be prevented from being transferred to the temperature sensor 2 even when the electronic component 1 is miniaturized. Therefore, the electronic component according to this embodiment can achieve both of miniaturization and highly sensitive temperature detection function of the electronic component and of suppression of deterioration caused by the laser welding.

Preferably, the dimension of the metal block 3 is sufficiently large as compared with the dimension of the temperature sensor 2. In this case, the heat generated during the laser welding can further be prevented from being transferred to the temperature sensor 2. When the temperature sensor 2 and the metal block 3 are connected to a conductor wiring 6 via a conductive connection material 7 as described later, the conductive connection material 7 can be effectively prevented from suffering an adverse effect caused by the heat during the laser welding. The adverse effect includes, for example, an occurrence of so-called splash failure (a phenomenon of a flux contained in a solder paste being scattered) during the laser welding in a case where the solder paste is used as the conductive connection material 7. The occurrence of the splash failure can be effectively suppressed by setting the dimension of the metal block 3 as described above. Furthermore, when the dimension of the metal block 3 is sufficiently large compared to the dimension of the temperature sensor 2, the heat generated during the laser welding can be effectively prevented from being transferred to the insulation part 5, and thus, the deterioration of the insulation part 5 caused by the heat such as, for example, the deterioration of a resin component such as epoxy resin contained in the insulation part 5 caused by the heat can be effectively suppressed. The volume of the metal block 3 can be appropriately adjusted in light of the dimension of the temperature sensor 2, the dimension of the electronic component 1 itself, welding conditions such as a temperature during the laser welding, laser irradiation diameter and irradiation time and the like. As an example, in a case of the laser irradiation diameter of about 0.07 mm and the irradiation time of about 20 ms during the laser welding and the temperature during the laser irradiation of about 1,100°C, the volume of the metal block 3 is preferably 1.0 mm³ or more.

It is preferable to adjust an area of the flat surface of the metal block 3 constituting the external terminal part 4 in accordance with the irradiation diameter of the laser used in the laser welding and the temperature during the laser irradiation. When the flat surface (upper surface) of the metal block 3 also serves as the external terminal part 4 as shown in Fig. 1, the area of the flat surface (upper surface) of the metal block 3 means an area of the external terminal part 4. Specifically, the flat surface of the metal block 3 preferably has a larger area as the irradiation diameter of the laser is increased, and the flat area preferably has a larger area as the temperature during the laser irradiation is increased. The generated heat can be effectively prevented from being transferred to the temperature sensor 2 by setting the area in such a manner. For example, when the metal block 3 contains Cu, the laser welding is conducted at a temperature higher than the melting point of Cu (1085°C). As an example, in a case of the laser irradiation diameter during the laser welding of about 0.07 mm and the temperature during the laser irradiation of about 1,100°C, the area of the flat surface of the metal block 3 constituting the external terminal part 4 is preferably 1.0 mm² or more.

The height of the metal block 3 is preferably larger than the height of the temperature sensor 2. The heat generated during the laser welding on the external terminal part 4 can further be prevented from being transferred to the temperature sensor 2 by setting the height of the metal block 3 in such a manner. When the temperature sensor 2 and the metal block 3 are electrically connected to the conductor wiring 6 via the conductive connection material 7, the distance between the external terminal part 4 and the mounting surface of the temperature sensor 2 and the metal block 3 can be increased by the height of the metal block 3 being larger than the height of the temperature sensor 2. As a result, the conductive connection material 7 can be effectively prevented from suffering an adverse effect caused by the heat during the laser welding.

The arrangement of the metal block 3 in the electronic component 1 is not particularly limited as long as the metal block 3 and the temperature sensor 2 are arranged in such a manner that the both are electrically connected to each other, and the arrangement can be set appropriately in accordance with the intended application. As the distance between the metal block 3 and the temperature sensor 2 is larger, the heat is less likely to be transferred to the temperature sensor 2, and thus the deterioration of the temperature sensor 2 caused by the heat can be suppressed. When the temperature sensor 2 and the metal block 3 are connected to the conductor wiring 6 via the conductive connection material 7, the heat is less likely to be transferred to the mounting surface as the distance between the metal block and the temperature sensor is larger, and thus the conductive connection material 7 can be effectively prevented from suffering the adverse effect caused by the heat during the laser welding. On the other hand, in a case of miniaturizing the electronic component 1, it is desirable to decrease the distance between the metal block 3 and the temperature sensor 2 to some extent. In the electronic component 1 according to this embodiment, the heat is less likely to be transferred to the temperature sensor 2 even when the distance between the metal block 3 and the temperature sensor 2 is relatively small, since the external terminal part 4 on which the laser welding is conducted is composed of a surface of the metal block having a large heat capacity. Accordingly, the deterioration of the temperature sensor 2 caused by the heat can effectively be suppressed. In addition, the conductive connection material 7 can be effectively prevented from suffering an adverse effect caused by the heat during the laser welding since the heat is less likely to be transferred to the mounting surface. The distance between the metal block 3 and the temperature sensor 2 and the arrangement of the metal block 3 and the temperature sensor 2 can be adjusted appropriately in light of the type and the dimension of the temperature sensor 2 and the dimension of the metal block 3 and the like. For example, the electronic component comprises two or more metal blocks 3, it is preferable to dispose the two or more metal blocks 3 around the temperature sensor 2. Both of the suppressed deterioration caused by the heat and the miniaturization and high sensitivity of the electronic component 1 can be achieved by disposing the metal blocks 3 in this manner.

The electronic component 1 shown in Fig. 1 comprises two metal blocks 3, and the two metal blocks 3 are disposed so as to sandwich the temperature sensor 2 in a direction substantially parallel to a direction from one electrode 21 toward the other electrode 21 of the temperature sensor 2. With such arrangement, a temperature sensor meeting various laser welding conditions (such as irradiation intensity and irradiation time of laser) can be easily accomplished while maintaining a temperature responsiveness of the temperature sensor 2 only by changing the height of the metal block 3 and the height of the electronic component 1 itself. The electronic component 1 shown in Fig. 1 comprises two metal blocks 3; however, the electronic component according to this embodiment may further comprise one or more additional metal blocks.

A metal material constituting the metal block 3 is not particularly limited, and it may include, for example, metals such as Cu, Fe, Al, Ti, V, Cr, Mn, Co, Ni, Zn, Mo, Ru, Pd, Ag, W, Pt and Au, metal alloys thereof and the like. The deterioration of the temperature sensor 2 caused by heat can be effectively suppressed as the metal material contained in the metal block 3 has larger heat capacity. In addition, the conductive connection material 7 can be effectively prevented from suffering an adverse effect by heat during the laser welding. The metal block 3 preferably comprises copper or copper alloy each of which has relatively large heat capacity. For example, the metal block 3 preferably comprises oxygen-free copper C1020, tough pitch copper C1100, phosphorous-deoxidized copper C1220 and the like. When the electronic component comprises two or more metal blocks, each of the metal blocks may be composed of the same metal material, or may be composed of different types of metal materials.

The metal block 3 can be manufactured by a method such as rolling, metal press and etching. It is desirable to conduct a surface treatment such as rust-proofing and/or plating (such as Ni/Sn plating) of the metal block 3 in order to prevent the metal block 3 from being oxidized during storage and during manufacturing process. However, such surface treatment is not indispensable. When the flat surface of the metal block 3 also serves as the external terminal part 4, a plating layer such as a Ni plating layer and/or an Au plating layer may be provided on this flat surface. The surface of the metal block can be protected from humidity and contamination such as corrosive gas by providing such plating layer, and thus a joint reliability by welding can be improved.

The electronic component 1 comprises the insulation part 5 embedding the temperature sensor 2 and the metal block 3. The insulation part 5 is provided to protect the temperature sensor 2 from an external environment. A material constituting the insulation part 5 is not particularly limited as long as it has an insulation property, and it may comprise, for example, a thermosetting resin such as an epoxy resin, a phenol resin, a silicone resin, a polyimide resin, a bismaleimide resin, an urea resin and a melamine resin; an insulating glass material such as a glass ceramics; an insulating substrate material such as alumina; and the like. The insulation part 5 is preferably composed of a material having high heat resistance in order to improve a resistance to a thermal stress which can occur during the welding.

The temperature sensor 2 and the metal block 3 may be disposed on the conductor wiring 6 which electrically connects the temperature sensor 2 and the metal block 3. The conductor wiring 6 may be, for example, a copper foil pattern, an electric wire such as a copper wire, a wiring of copper, silver alloy or the like formed on a circuit board, or the like. In this case, a surface of the metal block 3 having contact with the conductor wiring 6 is preferably opposed at least partially to the flat surface of the metal block 3 (the surface constituting the external terminal part 4). Such configuration can effectively prevent the heat generated during the laser welding from being transferred to the temperature sensor 2, and thus the deterioration of the temperature sensor 2 by the heat can be effectively suppressed. In addition, when the temperature sensor 2 and the metal block 3 are connected to the conductor wiring 6 via the conductive connection material 7, the configuration described above can effectively prevent the conductive connection material 7 from suffering an adverse effect by the heat during the laser welding. In the present specification, one surface "opposed at least partially" to another surface of the metal block 3 means a state where the one surface overlaps at least partially with the another surface as viewing the metal block 3 from above.

The temperature sensor 2 and the metal block 3 are preferably connected to the conductor wiring 6 via the conductive connection material 7. The electronic component 1 can be manufactured with a simple method by the connection of the temperature sensor 2 and the metal block 3 to the conductor wiring 6 in this manner. As the conductive connection material 7, for example, a solder (a solder paste), a flux, a conductive adhesive, an anisotropic conductive adhesive sheet or the like can be used.

At least a part of the conductor wiring 6 is preferably exposed on an outer surface of the electronic component 1. Such configuration can improve the responsiveness of the temperature sensor 2. When at least a part of the conductor wiring 6 is exposed on the outer surface of the electronic component 1, a plating layer such as a Ni plating layer and/or an Au plating layer may be provided on the exposed surface. The surface of the conductor wiring can be protected from humidity and contamination such as corrosive gas by providing such plating layer, and thus the life of the product can be improved. In addition, when such surface is brought into contact with an object to be measured to be used as a sensor, the plating layer contributes to improved reliability of measurement accuracy.

An area of a land part of the conductor wiring 6 is preferably larger than the total of areas of the mounting surfaces of the temperature sensor 2 and the metal block 3. Such configuration can increase an area of the conductor wiring 6 in contact with the object to be measured. Heat conductivity between the object to be measured and the temperature sensor 2 can be improved as the area of the conductor wiring 6 in contact with the object to be measured is increased, and as a result, the responsiveness of the temperature sensor 2 can be improved.

Then, an example of a method for manufacturing the electronic component 1 according to this embodiment will be described below with reference to Fig. 2. However, the method for manufacturing the electronic component according to this embodiment is not limited to the method described below.

First, for example, a dry film resist (PHOTEC-RY3237 manufactured by Hitachi Chemical Company, Ltd.) is attached by a laminator on a mother Cu foil having a thickness of 18 µm, and lithographic exposure and image development are conducted to form openings at portions corresponding to mounting portions of the temperature sensor 2 and the metal block 3 and a portion corresponding to a connection part between the temperature sensor 2 and the metal block 3, respectively of the dry film resist on the mother Cu foil. As the resist, a liquid resist can also be used besides the dry film resist.

Then, at the openings of the resist, a Cu plating layer, a Ni plating layer and a Sn plating layer are sequentially formed on the mother Cu foil by electrolytic plating or the like to form the conductor wiring 6 (Fig. 2A). When a solder paste is used as the conductive connection material, it is preferable to provide the plating layer to improve the joint reliability. However, in a case of using the other conductive connection material, the plating layer can be abbreviated.

Then, a solder paste (M705-GRN360-K2-V manufactured by Senju Metal Industry Co., Ltd.) as the conductive connection material 7 is applied on the mounting surfaces of the temperature sensor 2 and the metal block 3 on the conductor wiring 6 (Fig. 2B). The temperature sensor 2 and the metal block 3 are mounted on the conductive connection material 7, and heated in a reflow furnace to connect the temperature sensor 2 and the metal block 3 to the conductor wiring 6 (Fig. 2C).

Then, for example, four sheets of uncured resin sheets made of a thermosetting epoxy resin having a thickness of 100 µm are laid on top of one another, and pressure-bonded or the like to the temperature sensor 2 and the metal block 3 from mounted surfaces thereof to seal the temperature sensor 2 and the metal block 3 inside the insulating resin material. The insulating resin material is a material constituting the insulation part 5. The pressure bonding may be conducted at a pressure of 5 MPa for three minutes after vacuuming at a temperature of 130°C for two minutes. A thickness of the insulating resin material after the pressure bonding may be, for example, 300 µm. The pressure bonding described above is usually conducted by use of a press molding having a flat shape at its lower surface. Therefore, the upper surface (pressure-bonding surface) of the insulating resin material is formed into a flat shape.

The insulating resin material after the pressure bonding, and the temperature sensor 2 and the metal block 3 sealed therein are put into an oven and heated to cure the insulating resin material. The heating may be conducted, for example, at a temperature of 180°C for 60 minutes.

Then, the upper surface (pressure-bonding surface) of the insulating resin material is polished to expose one surface of the metal block 3. This exposed surface constitutes the external terminal part 4. The polishing may not be conducted in cases where one surface of the metal block 3 is sufficiently exposed at the upper surface of the insulating resin material after the pressure bonding and where the insulating resin material covering the upper surface of the metal block 3 is thin enough to be removed easily by tweezers or the like.

Then, a Cu foil is formed on the reverse sides of the mounted surfaces of the temperature sensor 2 and the metal block 3 by a subtractive method such as etching of the mother Cu foil. Subsequently, a Ni plating layer and an Au plating layer are sequentially formed by electrolytic plating or the like on the surface of the metal block 3 exposed by the polishing or the like and on the surface of the Cu foil formed on the reverse sides of the mounted surfaces of the temperature sensor 2 and the metal block 3.

Subsequently, the insulating resin material is cut with a cutting machine such as a clicker cutter and a dicer processing machine to obtain a piece of the electronic component 1 comprising the temperature sensor 2 and the metal block 3 embedded in the insulation part 5.

### [Second Embodiment]

Next, an electronic component according to a second embodiment of the present invention will be described below with reference to Fig. 3. In the second embodiment and a third and a fourth embodiments described later, descriptions about the matters in common with the first embodiment will be abbreviated, and only a point different from the first embodiment will be described. In particular, a similar effect caused by a configuration similar to that of the first embodiment is not mentioned point by point in the second to the fourth embodiments. However, the electronic components according to the second to the fourth embodiments cause effects similar to those caused by the electronic component according to the first embodiment unless specifically explained. The electronic component 1 according to the second embodiment comprises two metal blocks 3 and has a configuration similar to that of the electronic component according to the first embodiment except that the two metal blocks 3 are disposed so as to sandwich the temperature sensor 2 in a direction substantially perpendicular to a direction from one electrode 21 toward the other electrode 21 of the temperature sensor 2. Since the electronic component according to this embodiment has such configuration, the distance between the external terminal part 4 and the mounting surface of the temperature sensor 2 can be increased even when the electronic component 1 is miniaturized. Accordingly, the deterioration of the temperature sensor 2 caused by the heat generated during the laser welding can be effectively suppressed. In addition, when the temperature sensor 2 and the metal blocks 3 are connected to the conductor wiring 6 via the conductive connection material 7, the conductive connection material 7 can be effectively prevented from suffering an adverse effect by the heat during the laser welding. Furthermore, when the sizes of the mounting land parts are the same, a fillet inspection of the metal blocks 3 can be conducted more easily by miniaturizing the size of the electronic component 1, and thus the process management becomes easy. The electronic component 1 shown in Fig. 3 comprises two metal blocks 3; however, the electronic component according to this embodiment may further comprise one or more additional metal blocks. The metal blocks 3 shown in Fig. 3 each have a rectangular parallelepiped shape; however, the metal blocks may have the other shape such as a cylindrical shape.

The electronic component according to this embodiment can be manufactured by procedures similar to those of the electronic component according to the first embodiment described above. Specifically, in accordance with procedures similar to those of the electronic component according to the first embodiment, a conductor wiring 6 as shown in Fig. 4A is formed, a conductive connection material 7 is applied thereon as shown in Fig. 4B, then a temperature sensor 2 and a metal block 3 are mounted on the conductive connection material 7, and heated in a reflow furnace to connect the temperature sensor 2 and the metal block 3 to the conductor wiring 6 (Fig. 4C). Subsequently, pressure bonding of the insulating resin material and the like are conducted by procedures similar to those of the electronic component according to the first embodiment, and thus, the electronic component 1 according to the second embodiment can be obtained.

### [Third Embodiment]

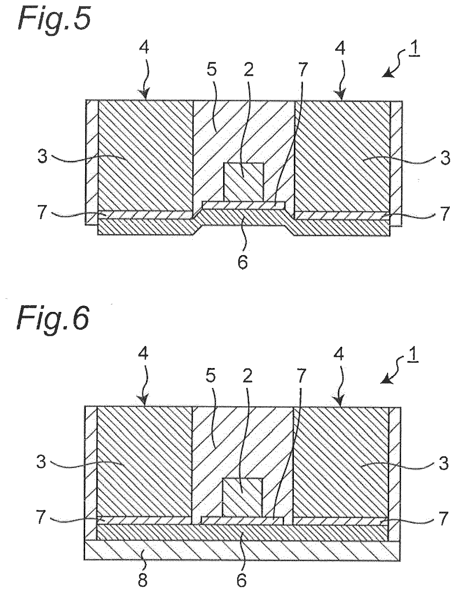

Next, the electronic component according to the third embodiment of the present invention will be described below with reference to Fig. 5. The electronic component 1 according to the third embodiment has a configuration similar to those of the electronic components according to the first and the second embodiments except that the conductor wiring 6 has a shape with a portion where the metal block 3 is disposed protruding toward an outside of the electronic component 1 (convex shape) relative to a portion where the temperature sensor 2 is disposed. In other words, the conductor wiring 6 has a concave shape at the portion where the temperature sensor 2 is disposed. The electronic component according to this embodiment can improve an adhesion of the temperature sensor 2 part to the object to be measured having curved surface, since the electronic component has the configuration as described above. As a result, the responsiveness of the temperature sensor 2 can be improved. In the electronic component according to this embodiment, the arrangement of the temperature sensor 2 and the metal block 3 is not particularly limited, and it may be an arrangement as shown in Fig. 1 or an arrangement as shown in Fig. 3.

The electronic component 1 according to this embodiment can be manufactured by appropriately adjusting a pressure during the pressure bonding of the insulating resin material and/or conducting the pressure bonding with a press mold provided with a convex portion and the like in the method for manufacturing the electronic component according to the first embodiment.

### [Fourth Embodiment]

Next, the electronic component according to the fourth embodiment of the present invention will be described below with reference to Fig. 6. The electronic component 1 according to the fourth embodiment has a configuration similar to those of the electronic components according to the first and the second embodiments except that the conductor wiring 6 is disposed on an insulating substrate 8. The insulating substrate 8 is not particularly limited as long as it has an insulation property, and the insulating substrate 8 may be, for example, an alumina substrate, a glass-epoxy substrate, a flexible substrate, a glass-ceramic substrate or the like. The electronic component 1 according to this embodiment has an advantage of capable of being manufactured by a simple method. Specifically, the conductor wiring can be formed by a method such as a thick-film printing of a conductor paste on the insulating substrate. The electronic component 1 according to this embodiment can be manufactured by the simple process compared to those of the first to the third embodiment in which the conductor wiring is formed by plating and etching of the mother Cu foil as described above. In the electronic component according to this embodiment, the arrangement of the temperature sensor 2 and the metal block 3 is not particularly limited, and it may be an arrangement as shown in Fig. 1 or an arrangement as shown in Fig. 3.

### Examples

Electronic components according to the first embodiment were prepared by use of a chip-type thermistor having 1608 size (1.6×0.8×0.8 mm) as the temperature sensor and a copper block as the metal block. The copper block used had a cross-sectional area (an area of the flat surface) of 0.50 mm² to 3.14 mm² and a height of 0.4 mm to 2.0 mm. Laser welding (laser welding temperature: 1,100°C, irradiation diameter: 0.07 mm, irradiation time: 20 ms) was conducted for each of the electronic components, and temperature data of the chip-type thermistors immediately after the laser welding were obtained. The results are shown in Table 1. It can be seen from Table 1 that the temperature of the chip-type thermistor immediately after the laser welding was decreased as the cross-sectional area of the copper block was increased. It can also be seen that the temperature of the chip-type thermistor immediately after the laser welding was decreased as the height of the copper block was increased. It can be seen from those results that the heat generated during the laser welding can be prevented from being transferred to the chip-type thermistor by appropriately setting the dimension of the copper block, and thus, the heat stress to the chip-type thermistor can be suppressed to sufficiently low level. Therefore, the deterioration of the temperature sensor caused by the heat generated during the laser welding is considered to be suppressed by appropriately setting the dimension of the copper block.

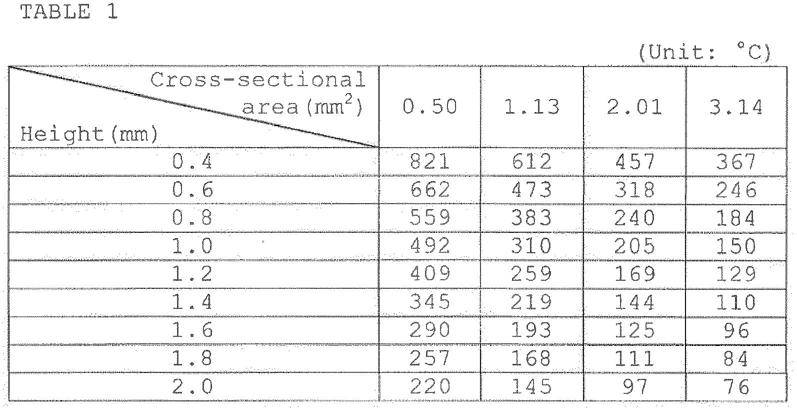

### Industrial Applicability

The electronic component according to the present invention can achieve both of miniaturization and highly sensitive temperature detection function and of suppression of the deterioration by laser welding, and thus can be used in electronic devices which require miniaturization and enhanced performance.

### Reference Sighs List

- 1: Electronic component
- 2.: Temperature sensor
- 21: Electrode of temperature sensor
- 3: Metal block
- 4: External terminal part
- 5: Insulation part
- 6: Conductor wiring
- 7: Conductive connection material
- 8: Insulating substrate

## Claims

1. An electronic component comprising:
a temperature sensor comprising a pair of electrodes;
at least one metal block electrically connected to the electrode of the temperature sensor;
an insulation part embedding the temperature sensor and the at least one metal block therein; and
a pair of external terminal parts electrically connected to the electrodes of the temperature sensor,
wherein the at least one metal block has a flat surface exposed from the insulation part, the flat surface constituting the external terminal part.

2. The electronic component according to claim 1, wherein the height of the metal block is larger than the height of the temperature sensor.

3. The electronic component according to claim 1 or 2, wherein the temperature sensor and the metal block are disposed on a conductor wiring electrically connecting the temperature sensor and the metal block, and
wherein a surface of the metal block in contact with the conductor wiring is at least partially opposed to the flat surface of the metal block.

4. The electronic component according to claim 3, wherein the temperature sensor and the metal block are connected to the conductor wiring via a conductive connection material.

5. The electronic component according to claim 3 or 4, wherein at least a part of the conductor wiring is exposed at an outer surface of the electronic component.

6. The electronic component according to any one of claims 3 to 5, wherein an area of a land part of the conductor wiring is larger than the total of areas of mounting surfaces of the temperature sensor and the metal block.

7. The electronic component according to any one of claims 3 to 6, wherein the conductor wiring has a shape with a portion where the metal block is disposed protruding toward an outside of the electronic component relative to a portion where the temperature sensor is disposed.

8. The electronic component according to any one of claims 3 to 6, wherein the conductor wiring is disposed on an insulating substrate.

9. The electronic component according to any one of claims 1 to 8, wherein the electronic component comprises two or more metal blocks, and wherein the two or more metal blocks are disposed around the temperature sensor.

10. The electronic component according to claim 9, wherein the electronic component comprises two metal blocks, and wherein the two metal blocks are disposed so as to sandwich the temperature sensor in a direction substantially parallel to a direction from one electrode toward the other electrode of the temperature sensor.

11. The electronic component according to claim 9, wherein the electronic component comprises two metal blocks, and wherein the two metal blocks are disposed so as to sandwich the temperature sensor in a direction substantially perpendicular to a direction from one electrode toward the other electrode of the temperature sensor.

12. The electronic component according to any one of claims 1 to 11, wherein the metal block comprises copper or copper alloy.

13. The electronic component according to any one of claims 1 to 12, wherein the temperature sensor is a chip-type thermistor.
